# EUROPÄISCHE PATENTSCHRIFT

(11) **EP 3 835 864 B1**
(45) Veröffentlichungstag und Bekanntmachung des Hinweises auf die Patenterteilung: **28.05.2025**
(21) Anmeldenummer: 20213055.5
(22) Anmeldetag: 10.12.2020
(51) Int. Cl.: G03B 17/18, G03B 17/56, H04N 23/66

(54) **FERNSTEUEREINHEIT FÜR EINE BEWEGTBILDKAMERA**
REMOTE CONTROL UNIT FOR MOVING IMAGE CAMERA
UNITÉ DE TÉLÉCOMMANDE POUR UNE CAMÉRA À IMAGE ANIMÉE

(30) Priorität: 11.12.2019 DE 102019134014
(43) Veröffentlichungstag der Anmeldung: 16.06.2021
(73) Patentinhaber: Arnold & Richter Cine Technik GmbH & Co. Betriebs KG, 80807 München (DE)
(72) Erfinder: Lanz, Georg, 80993 München (DE); Voss, Hendrik, 81673 München (DE)
(74) Vertreter: Manitz Finsterwald Patent- und Rechtsanwaltspartnerschaft mbB

(56) Entgegenhaltungen:
- EP-A1- 0 572 101
- EP-A1- 3 013 039
- EP-A2- 2 706 407
- DE-A1- 19 629 484
- US-A1- 2008 002 033
- US-A1- 2009 315 671
- US-A1- 2017 019 580

## Beschreibung

Die Erfindung betrifft eine Fernsteuereinheit für eine Bewegtbildkamera mit Objektiv-Stellmotor, umfassend ein bewegliches Bedienelement zum Einstellen von Steuerbefehlen für eine zugeordnete Kamera, eine Auswerte- und Steuereinrichtung zum Erzeugen eines Stellmotor-Steuersignals für die Kamera (einschließlich eines Kameraobjektivs) in Abhängigkeit von dem eingestellten Steuerbefehl und eine Ausgabeeinrichtung zum Übermitteln des Stellmotor-Steuersignals an die zugeordnete Kamera.

Eine elektronische Bewegtbildkamera umfasst üblicherweise ein integriertes optisches System (Kameraobjektiv) oder einen Objektivanschluss zum Montieren eines Wechselobjektivs, ferner einen elektronischen Bildsensor zum Erzeugen von Bildsignalen aus einfallendem Licht und eine Bildsignalverarbeitungseinrichtung zum Erzeugen eines digitalen Bilddatenstroms aus den Bildsignalen. Eine Fernsteuereinheit kann dazu vorgesehen sein, eine herkömmliche oder elektronische Bewegtbildkamera zum Aufnehmen von Bewegtbildaufnahmen anzusteuern und/oder Aufnahmeparameter einzustellen, wie beispielsweise die Bildaufnahmefrequenz, die Verschlusszeit, oder die Irisblendenöffnung, die Fokuslage (Schärfe) oder die Brennweite (Zoom-Faktor) des Kameraobjektivs. Die Einstellung der Irisblendenöffnung, der Fokuslage und der Brennweite kann durch einen jeweiligen Objektiv-Stellmotor erfolgen, der in das Kameraobjektiv integriert ist oder typischerweise als separate, externe Einheit außerhalb des Kameraobjektivs angeordnet ist und mit einem drehbaren Objektivring des Kameraobjektivs verbunden ist, um diesen zu verstellen. Die Steuerung des jeweiligen Objektiv-Stellmotors kann durch eine Fernsteuereinheit erfolgen, wie beispielsweise aus DE 196 29 484 A1 und WO 2010/046237 A1 bekannt. Zum Einstellen unterschiedlicher Aufnahmeparameter vor und insbesondere während einer Bewegtbildaufnahme können mehrere Objektiv-Stellmotoren vorgesehen sein, wie dies beispielsweise aus DE 42 19 331 A1 bekannt ist.

Darüber hinaus ist aus EP 2 706 407 A2 eine Fernsteuereinheit mit einer Auswerte- und Steuereinrichtung zur drahtlosen Kommunikation mit einer Fokuseinstelleinrichtung einer Laufbildkamera bekannt. Dabei ist die Auswerte- und Steuereinrichtung dazu ausgebildet, ein Steuersignal in Abhängigkeit von einer Winkelposition eines drehbaren Bedienelements zu erzeugen.

In EP 0 572 101 A1 ist ein Bedienelement zur Einstellung fotografischer Parameter einer Kamera mit einem Verstellelement beschrieben, bei welchem Eckwerte der Parameter eingegeben werden können und ein akustisches Signal an einem Kopfhörer ausgegeben wird. Ein Takt des Tonsignals variiert in Abhängigkeit von der Differenz zwischen dem eingestellten Parameterwert und dem Eckwert, so dass ein Anwender sich auf das fotografische Geschehen konzentrieren und die Parameter an Änderungen des Geschehens anpassen kann.

US 2017/019580 A1 beschreibt eine Steuereinrichtung für eine Actionkamera, welche eine Sprachsteuerung der Kamera ermöglichen soll. Zudem kann an der Steuereinrichtung ein für einen Nutzer wahrnehmbares Feedback-Signal wiedergegeben werden, wenn ein an der Steuereinrichtung eingegebener Befehl an der Kamera empfangen und/oder von der Kamera ausgeführt wurde.

Durch die Möglichkeit zur ferngesteuerten Steuerung bzw. Einstellung der Aufnahmeparameter einer Bewegtbildkamera kann insbesondere erreicht werden, dass sich ein die Kamera führender Kameramann ausschließlich auf die korrekte und sich während der Aufnahme einer Szene in der Regel verändernde Ausrichtung der Kamera zur Einhaltung des gewünschten Bildausschnitts konzentrieren kann. Die jeweilige korrespondierende Einstellung der Aufnahmeparameter der Kamera kann hingegen von einem ausschließlich dafür Sorge tragenden Bediener der Fernsteuereinheit, beispielsweise einem Kameraassistenten oder Schärfezieher, vorgenommen werden, der durch Bewegen des Bedienelements an der Fernsteuereinheit die jeweiligen Steuerbefehle für die Kamera einstellen kann. Insbesondere kann der Bediener dabei während einer Aufnahme eine vorher mit dem Kameramann abgestimmte Abfolge von Steuerungsbefehlen einstellen.

Während ein solcher Ablauf einzustellender Steuerbefehle für die Kamera während der Aufnahme einer Szene in der Regel unproblematisch von einem die Szene verfolgenden Kameraassistenten durchzuführen ist, kann es durch Unterbrechungen oder vor Beginn eines Drehs zu Abstimmungsschwierigkeiten beim Start bzw. der Wiederaufnahme eines abgesprochenen Steuerungsablaufs kommen. Vor Drehbeginn kann die Bewegtbildkamera zwar eingeschaltet sein und sich in einem Bereitschaftszustand befinden, in welchem die Kamera aufnahmebereit ist und jedoch noch keine Aufnahme erstellt wird. Für den Beginn eines Drehs muss der Kameramann die Bewegtbildkamera hingegen in einen Aufnahmezustand überführen, um eine Szene festzuhalten. Dieser Wechsel des Betriebszustands der Kamera in den Aufnahmezustand kann jedoch für einen möglicherweise von der Szene entfernt positionierten Kameraassistenten oder Schärfezieher schwer wahrnehmbar sein, da dieser gegebenenfalls Anweisungen zum Start der Aufnahme nicht vernehmen kann.

Um dieser Problematik zu begegnen, kann die Fernsteuereinheit den Aufnahmezustand der Kamera visuell wahrnehmbar, beispielsweise durch ein aufleuchtendes Licht, signalisieren. Dies erfordert jedoch, dass der Kameraassistent oder Schärfezieher die Fernsteuereinheit ständig im Blick behält, um den Wechsel der Bewegtbildkamera in den Aufnahmezustand nicht zu verpassen. Dies hindert den Kameraassistent oder Schärfezieher jedoch, die aufzunehmende Szene (wie beispielsweise die Position von Schauspielern) zu beobachten, und es besteht die Gefahr, dass ein derartiges optisches Signal übersehen wird.

Es ist eine Aufgabe der Erfindung, eine Fernsteuereinheit für eine Bewegtbildkamera zu schaffen, die einem Bediener einen Wechsel der Kamera in den Aufnahmezustand, also den Beginn eines Aufnehmens von Bewegtbildern, zuverlässig wahrnehmbar anzeigt.

Diese Aufgabe wird gelöst durch eine Fernsteuereinheit mit den Merkmalen des Anspruchs 1.

Die Fernsteuereinheit umfasst eine Empfangseinrichtung zum Empfangen von Betriebszustandssignalen von der zugeordneten Kamera und eine Rückmeldeeinrichtung, wobei die Auswerte- und Steuereinrichtung dazu ausgebildet ist, in Ansprechen auf ein empfangenes Betriebszustandssignal, welches einen direkt an der Kamera ausgelöst Wechsel der zugeordneten Kamera von einem Bereitschaftszustand in einen Aufnahmezustand repräsentiert, die Rückmeldeeinrichtung zum Erzeugen eines Kamerastatus-Rückmeldesignals anzusteuern, das unmittelbar oder indirekt akustisch und/oder haptisch wahrnehmbar ist.

Indem die Fernsteuereinheit eine Empfangseinrichtung zum Empfangen von Betriebszustandssignalen der zugeordneten Kamera umfasst, kann zunächst grundsätzlich ein Wechsel der Kamera von dem Bereitschaftszustand in den Aufnahmezustand an die Fernsteuereinheit übermittelt werden. Wie vorstehend bereits erläutert, bezeichnet der Bereitschaftszustand der Kamera einen Betriebszustand, in welchem die Kamera in der Regel zwar eingeschaltet und jedenfalls zur Aufnahme bereit ist, jedoch keine Aufnahme erfolgt. In dem Aufnahmezustand hingegen ist die Kamera eingeschaltet und nimmt die Szene auf (z.B. unmittelbares Aufzeichnen der Bilddaten in der Kamera oder in einem angeschlossenen Rekorder, oder Übertragen der Bilddaten für ein entferntes Speichern oder für eine Ausstrahlung).

Grundsätzlich kann eine Kamera auch von einem ausgeschalteten Zustand durch Anschalten direkt eine Aufnahme beginnen, sodass in solchen Fällen auch der ausgeschaltete Zustand einen Bereitschaftszustand der Kamera bedeutet. Meist ist es jedoch vorgesehen, dass eine Kamera zunächst einzuschalten und dann durch einen weiteren Befehl, beispielsweise durch Drücken eines "REC"-Knopfes, in den Aufnahmezustand zu versetzen ist. In all diesen Fällen besteht jedenfalls das eingangs erläuterte Problem, dass das Überführen der Kamera von dem Bereitschaftszustand in den Aufnahmezustand von dem Kameramann direkt an der Kamera ausgelöst worden ist (und nicht etwa aufgrund eines von der Fernsteuereinheit übermittelten Steuerbefehls), und dass dieser Wechsel für einen möglicherweise von der Szene entfernt positionierten Kameraassistenten oder Schärfezieher demzufolge schwer wahrnehmbar sein kann.

Das Ansteuern der Rückmeldeeinrichtung mittels der Auswerte- und Steuereinrichtung bei einem festgestellten Wechsel der Kamera in den Aufnahmezustand und das entsprechende Erzeugen eines Kamerastatus-Rückmeldesignals ermöglicht es, einen Bediener der Fernsteuereinheit auf den erfolgten Wechsel der Kamera in den Aufnahmezustand aufmerksam zu machen. Indem dieses Rückmeldesignal akustisch und/oder haptisch wahrnehmbar ist, ist es dabei nicht erforderlich, dass der Bediener das Geschehen im Bereich der Kamera ständig verfolgt oder die Fernsteuereinheit ständig im Blick behält. Somit kann der Bediener sich auch weit weg von der Kamera aufhalten oder sich auf die Positionen der Akteure und Objekte in der aufzunehmenden Szene konzentrieren. Dennoch ist sichergestellt, dass der Bediener der Fernsteuereinheit den tatsächlichen Beginn der Aufnahme zuverlässig wahrnimmt, damit der Bediener sodann eine geplante oder einstudierte Abfolge von Steuerungsbefehlen an der Fernsteuereinheit einstellen kann.

Ein solches die Aufmerksamkeit des Bedieners sicherstellendes Kamerastatus-Rückmeldesignal kann beispielsweise unmittelbar akustisch wahrnehmbar sein, indem die Fernsteuereinheit zu einem direkten Erzeugen von Schall ausgebildet ist. Dazu kann die Fernsteuereinheit beispielsweise einen Lautsprecher umfassen. Ferner kann die Rückmeldeeinrichtung zu einem Erzeugen indirekt akustisch wahrnehmbarer Kamerastatus-Rückmeldesignale ausgebildet sein. Die Rückmeldeeinrichtung kann dazu beispielsweise in Ansprechen auf das empfangene Betriebszustandssignal ein Kamerastatus-Rückmeldesignal erzeugen, welches eine Audioinformation repräsentiert und welches von einem von der Fernsteuereinheit separaten Wandler in Schall umgewandelt wird. Dazu kann die Rückmeldeeinrichtung insbesondere mit einem externen Lautsprecher oder Kopfhörer verbunden bzw. verbindbar sein, durch bzw. an welchem die Schallerzeugung letztlich erfolgt. Alternativ oder zusätzlich können auch haptisch wahrnehmbare Kamerastatus-Rückmeldesignale unmittelbar, beispielsweise durch ein fühlbares Vibrieren der Fernsteuereinheit, oder indirekt wahrnehmbar sein, indem ein tatsächlich fühlbares Signal durch ein gesondert von der Fernsteuereinheit vorgesehenes und beispielsweise in einer Hosentasche transportierbares oder an einem Armgelenk tragbares Gerät erzeugt wird.

Die Empfangseinrichtung der Fernsteuereinheit und die Ausgabeeinrichtung zum Übermitteln des Stellmotor-Steuersignals an die Kamera können ein gemeinsames Modul, beispielsweise einen Transceiver, bilden und/oder Teil der Auswerte-und Steuereinrichtung sein. Auch die Auswerte- und Steuereinrichtung kann als eine einzige Einheit (z.B. diskrete oder integrierte Schaltung, Mikroprozessor, ASIC, FPGA) oder modular mit mehreren Untereinheiten aufgebaut sein, so dass beispielsweise die Ausgabeeinrichtung und die Empfangseinrichtung als jeweilige gesonderte Module ausgebildet und mit der Auswerte- und Steuereinrichtung verbunden sein können. Beispielsweise kann auch eine Untereinheit der Auswerte-und Steuereinrichtung das jeweilige Stellmotor-Steuersignal in Abhängigkeit von dem eingestellten Steuerbefehl erzeugen, während eine andere Untereinheit (die mit der einen Untereinheit z.B. auch lediglich signaltechnisch verbunden sein kann) die Rückmeldeeinrichtung zum Erzeugen des Kamerastatus-Rückmeldesignals ansteuert.

Die der Fernsteuereinheit zugeordnete Bewegtbildkamera kann für das Anschlie-ßen von Wechselobjektiven ausgebildet sein. Dadurch kann die Bewegtbildkamera mit verschiedenen, an die jeweilige Szene angepassten Kameraobjektiven ausgerüstet werden. Die Fernsteuereinheit kann dazu ausgebildet sein, Stellmotor-Steuersignale für den oder die Objektiv-Stellmotoren des jeweiligen Kameraobjektivs zu erzeugen und an die Kamera bzw. eine dort intern oder separat vorgesehene Steuerschaltung zu übermitteln. Die Fernsteuereinheit kann hierfür universell einsetzbar sein, insbesondere im Falle der üblichen Verwendung von externen Objektiv-Stellmotoren.

Bei einigen Ausführungsformen kann die Rückmeldeeinrichtung einen Lautsprecher aufweisen und das Kamerastatus-Rückmeldesignal kann ein von dem Lautsprecher erzeugtes akustisch wahrnehmbares Tonsignal umfassen. Im Zusammenhang mit der Erfindung bezieht sich der Ausdruck "Lautsprecher" auf jegliche Art von Schallgenerator bzw. Tonausgabegerät (z.B. Piezo-Schallgeber). Bei solchen Ausführungsformen ist das Kamerastatus-Rückmeldesignal folglich unmittelbar akustisch wahrnehmbar und ein Bediener der Fernsteuereinheit kann direkt durch die Fernsteuereinheit auf einen Wechsel der Kamera in den Aufnahmezustand aufmerksam gemacht werden.

Gemäß einer Ausführungsform kann die Lautstärke des von dem Lautsprecher erzeugten Tonsignals einstellbar sein, um einerseits ein Wahrnehmen des Kamerastatus-Rückmeldesignals durch den Bediener der Fernsteuereinheit sicherstellen und andererseits ein Stören sonstiger an der Aufnahme beteiligter Personen durch das Tonsignal vermeiden zu können. Hierfür kann beispielsweise die Auswerte-und Steuereinrichtung mit einem entsprechenden Lautstärkeregler der Fernsteuereinheit verbunden sein, und/oder eine ohnehin vorhandene Eingabeeinrichtung der Fernsteuereinheit (z.B. für das Eingeben von Steuerbefehlen oder für ein Konfigurieren der Fernsteuereinheit) kann auch für ein Einstellen der Lautstärke des Tonsignals genutzt werden.

Alternativ oder zusätzlich kann der Lautsprecher wahlweise abschaltbar sein, um die Erzeugung des akustisch wahrnehmbaren Tonsignals wahlweise zu unterbinden. Hierfür kann die Fernsteuereinheit beispielsweise einen Schalter aufweisen (mechanischer oder virtueller Schalter), mittels dessen die Erzeugung des akustisch wahrnehmbaren Tonsignals wahlweise abschaltbar ist.

Ein solches Tonsignal kann insbesondere einen einzelnen Ton, eine Tonfolge oder eine synthetische sprachliche Anweisung umfassen. Ferner kann das Tonsignal als einen einzelnen Ton wiederholend vorgesehen sein, um beispielsweise den Aufnahmezustand der Kamera dauerhaft anzuzeigen.

Grundsätzlich kann ausschließlich das Tonsignal erzeugt werden, wobei es auch möglich ist, dass das Kamerastatus-Rückmeldesignal weitere, beispielsweise haptisch und/oder indirekt akustisch wahrnehmbare Signale umfasst.

Die Rückmeldeeinrichtung kann einen drahtgebundenen Audiosignalausgang und/oder drahtlosen Audiosignalausgang aufweisen, über welchen das Kamerastatus-Rückmeldesignal an ein gekoppeltes externes Tonausgabegerät übermittelbar ist. Bei solchen Ausführungsformen kann das Kamerastatus-Rückmeldesignal folglich indirekt, über das externe Tonausgabegerät, akustisch wahrgenommen werden. Ein drahtgebundener Audiosignalausgang kann es dabei ermöglichen, ein analoges oder digitales Audiosignal an ein angeschlossenes Tonausgabegerät, beispielsweise einen externen Lautsprecher oder einen Kopfhörer, zu übermitteln. Bei einer derartigen Ausführungsform kann die Rückmeldeeinrichtung beispielsweise einen Treiber umfassen, der ein analoges Treibersignal (Spannungssignal) für das angeschlossene Tonausgabegerät erzeugt. Durch ein über einen drahtlosen Audiosignalausgang übermitteltes Audiosignal kann mittels des empfangenden externen Tonausgabegeräts ein akustisch wahrnehmbares Signal gemäß dem verwendeten Signalformat und/oder Funkprotokoll gebildet werden, wobei insbesondere eine Bluetooth-Verbindung vorgesehen sein kann. Bei einer derartigen Ausführungsform kann die Rückmeldeeinrichtung beispielsweise ein Funkmodul aufweisen, welches das Kamerastatus-Rückmeldesignal als Funksignal erzeugt, in dem die Audioinformation kodiert ist. Auch hierbei kann insbesondere eine Übermittlung an einen externen Lautsprecher oder einen Kopfhörer vorgesehen sein.

Durch eine solche Übermittlung des Kamerastatus-Rückmeldesignals an ein externes Tonausgabegerät und insbesondere einen Kopfhörer kann ein indirekt akustisch wahrnehmbares Kamerastatus-Rückmeldesignal erzeugt werden. Insbesondere bei der Verwendung eines Kopfhörers als externes Tonausgabegerät kann dabei erreicht werden, dass das Kamerastatus-Rückmeldesignal ausschließlich von dem adressierten Bediener der Fernsteuereinheit und nicht von sonstigen Personen im Umkreis der Fernsteuereinheit wahrgenommen wird. Eine mögliche Störung des Aufnahmebetriebs aufgrund eines für sämtliche Beteiligten hörbaren Kamerastatus-Rückmeldesignals kann dadurch vermieden werden.

Bei einigen Ausführungsformen kann die Fernsteuereinheit eine Auswahleinrichtung umfassen, mittels derer das Erzeugen des Kamerastatus-Rückmeldesignals wahlweise unterdrückbar ist. Dadurch kann ein unter Umständen störendes unmittelbar akustisch wahrnehmbares Rückmeldesignal bei bestimmten Aufnahmen oder in bestimmten Situationen wahlweise unterdrückt werden, wenn diese Aufnahmen beispielsweise ohnehin die volle Aufmerksamkeit sämtlicher Beteiligter erfordern oder, beispielsweise bei Tieraufnahmen, ein Tonsignal unweigerlich eine Störung der Aufnahme zur Folge haben kann.

Bei einigen Ausführungsformen kann die Rückmeldeeinrichtung einen Lautsprecher sowie einen drahtgebundenen und/oder drahtlosen Audiosignalausgang aufweisen, wobei die Auswerte- und Steuereinrichtung dazu ausgebildet sein kann, in Ansprechen auf das empfangene Betriebszustandssignal die Rückmeldeeinrichtung zum Ausgeben des Kamerastatus-Rückmeldesignals über den Audiosignalausgang anzusteuern und jedoch ein Ausgeben eines von dem Lautsprecher erzeugten Tonsignals zu unterdrücken, wenn ein externes Tonausgabegerät mit dem Audiosignalausgang gekoppelt ist. Die Fernsteuereinheit kann folglich zwar einen Lautsprecher aufweisen und dadurch dazu ausgebildet sein, ein unmittelbar akustisch wahrnehmbares Kamerastatus-Rückmeldesignal zu erzeugen, ohne dass grundsätzlich zusätzliche Geräte erforderlich sind. Indem jedoch zusätzlich zu dem Lautsprecher ein Audiosignalausgang vorgesehen ist, ermöglicht eine solche Fernsteuereinheit wahlweise auch das Erzeugen eines indirekt akustisch wahrnehmbaren Kamerastatus-Rückmeldesignals an einem externen Tonausgabegerät, beispielsweise einem Kopfhörer. Ist ein solches Tonausgabegerät mit dem Audiosignalausgang gekoppelt, kann durch das Unterdrücken des von dem Lautsprecher erzeugten Tonsignals erreicht werden, dass ausschließlich ein indirekt über das externe Tonausgabegerät akustisch wahrnehmbares Signal erzeugt wird. Insbesondere bei der Verwendung eines Kopfhörers kann dadurch erreicht werden, dass der Bediener der Fernsteuereinheit zuverlässig auf einen Wechsel der Kamera in den Aufnahmezustand aufmerksam wird, während ein zusätzliches, in diesem Fall nicht erforderliches und möglicherweise störendes direktes Tonsignal des Lautsprechers unterdrückt wird.

Um ein automatisches Unterdrücken des von dem Lautsprecher erzeugten Tonsignals zu erreichen, kann die Auswerte- und Steuereinrichtung dazu ausgebildet sein, das Koppeln eines externen Tonausgabegeräts, insbesondere eines Kopfhörers, mit dem Audiosignalausgang zu erfassen und infolgedessen das Ausgeben eines mittels des Lautsprechers erzeugten Tonsignals zu unterdrücken und/oder den Lautsprecher zu deaktivieren.

Die Rückmeldeeinrichtung kann bei einigen Ausführungsformen eine Vibrationseinrichtung aufweisen, wobei das Kamerastatus-Rückmeldesignal ein von der Vibrationseinrichtung erzeugtes und von einem Bediener der Fernsteuereinheit fühlbares Vibrationssignal umfassen kann. Auch durch ein solches, direkt haptisch wahrnehmbares Kamerastatus-Rückmeldesignal kann ein die Fernsteuereinheit haltender Benutzer zuverlässig und ohne die Bewegtbildkamera oder die Fernsteuereinheit ständig im Blick halten zu müssen auf einen Wechsel der Kamera in den Aufnahmezustand aufmerksam gemacht werden.

Insbesondere kann die Rückmeldeeinrichtung dazu ausgebildet sein, ein solches Vibrationssignal alternativ oder zusätzlich zu einem unmittelbar und/oder indirekt akustisch wahrnehmbaren Tonsignal zu erzeugen. Beispielsweise kann es vorgesehen sein, dass das Kamerastatus-Rückmeldesignal neben dem unmittelbar haptisch wahrnehmbaren Vibrationssignal ein indirekt akustisch wahrnehmbares Tonsignal umfasst, welches an einem über einen Audiosignalausgang mit der Fernsteuereinheit gekoppelten Kopfhörer erzeugt wird. Durch ein solches mehrfach wahrnehmbares Kamerastatus-Rückmeldesignal kann beispielsweise ein Bediener der Fernsteuereinheit, der einen zur Übermittlung eines indirekt akustisch wahrnehmbaren Kamerastatus-Rückmeldesignals vorgesehenen Kopfhörer während einer Unterbrechung des Drehs abnimmt, durch das zusätzlich erzeugte haptisch wahrnehmbare Vibrationssignal auf den Wechsel der Kamera in den Aufnahmezustand aufmerksam gemacht werden. Umgekehrt kann einem die Fernsteuereinheit beispielsweise kurzzeitig ablegenden Bediener dieser Wechsel über den Kopfhörer mitgeteilt werden.

Die Auswerte- und Steuereinrichtung kann dazu ausgebildet sein, in Ansprechen auf ein empfangenes Betriebszustandssignal, welches einen Wechsel der zugeordneten Kamera von dem Aufnahmezustand zurück in den Bereitschaftszustand repräsentiert, die Rückmeldeeinrichtung zum Erzeugen eines weiteren Kamerastatus-Rückmeldesignals anzusteuern, das unmittelbar oder indirekt akustisch und/oder haptisch wahrnehmbar ist. Dadurch kann auch eine Beendigung des Drehs zuverlässig an den Bediener der Fernsteuereinheit übermittelt werden, so dass etwaige Abstimmungsschwierigkeiten zwischen einem die Kamera führenden Kameramann und dem Bediener auch bei einem solchen Wechsel des Betriebszustandes der Kamera ausgeschlossen werden können. Auch das weitere Kamerastatus-Rückmeldesignal kann bei Ausführungsformen, welche eine Auswahleinrichtung umfassen, mittels dieser Auswahleinrichtung wahlweise unterdrückbar sein.

Das Kamerastatus-Rückmeldesignal und das weitere Kamerastatus-Rückmeldesignal können sich voneinander unterscheiden. Durch eine solche Unterscheidbarkeit der jeweiligen Kamerastatus-Rückmeldesignale kann erreicht werden, dass es für einen Bediener der Fernsteuereinheit stets klar ersichtlich ist, in welchen Betriebszustand die Kamera gewechselt ist. Beispielsweise können sich bei unmittelbar oder indirekt akustisch wahrnehmbaren Rückmeldesignalen die Höhe bzw. Frequenz eines erzeugten Tons und/oder die Anzahl der erzeugten Töne in Abhängigkeit von dem erfolgten Wechsel des Betriebszustands der Kamera voneinander unterscheiden oder es können jeweilige, sich voneinander unterscheidende Tonfolgen erzeugt werden. Bei haptisch wahrnehmbaren Kamerastatus-Rückmeldesignalen kann sich beispielsweise die Anzahl erfolgender Vibrationen unterscheiden.

Bei einigen Ausführungsformen kann die Auswerte- und Steuereinrichtung dazu ausgebildet sein, in Abhängigkeit von dem Steuerbefehl, welcher vom Bediener mittels des Bedienelements eingestellt wird, die Rückmeldeeinrichtung zum Erzeugen eines Einstellwert-Rückmeldesignals anzusteuern, das unmittelbar oder indirekt akustisch und/oder haptisch wahrnehmbar ist. Bei solchen Ausführungsformen kann die Rückmeldeeinrichtung folglich nicht ausschließlich zum Anzeigen eines Wechsels des Betriebszustandes der Kamera dienen, sondern einen Bediener beispielsweise auch auf das Erreichen eines vorgesehenen Steuerbefehls bzw. einer dazu korrespondierenden Position oder Bewegung des Bedienelements hinweisen (z.B. Erreichen einer vorbestimmten Fokuslage). Dadurch kann der Bediener die Steuerbefehle insbesondere einstellen, ohne die Fernsteuereinheit ständig im Blick halten zu müssen und kann stattdessen die aufzunehmende Szene dauerhaft beobachten, um das zeitlich korrekte Einstellen der Steuerbefehle sicherstellen zu können. Die Einstellwert-Rückmeldesignale können dabei in gleicher Weise wie die vorstehend erläuterten Kamerastatus-Rückmeldesignale erzeugt und/oder gehandhabt werden. Auch die Einstellwert-Rückmeldesignale können somit gegebenenfalls an ein externes Tonausgabegerät übermittelt werden und/oder wahlweise unterdrückbar sein.

Die Rückmeldeeinrichtung kann dazu ausgebildet sein, für verschiedene Steuerbefehle zugeordnete und voneinander unterscheidbare Einstellwert-Rückmeldesignale zu erzeugen. Beispielsweise kann es vorgesehen sein, dass infolge eines Verstellens des Bedienelements der eingestellte Steuerbefehl bzw. ein Wert eines an der Kamera eingestellten Aufnahmeparameters, beispielsweise eine Fokuslage, dem Bediener akustisch mitgeteilt wird (z.B. als synthetische sprachliche Mitteilung). Der Bediener kann dadurch stets über die vorgenommenen Einstellungen informiert werden.

Die Rückmeldeeinrichtung kann einen optischen Signalgeber umfassen, der dazu ausgebildet ist, alternativ oder zusätzlich zu den Kamerastatus-Rückmeldesignalen optisch wahrnehmbare Anzeigesignale zu erzeugen. Auch durch solche optisch wahrnehmbare Anzeigesignale kann der Bediener auf einen Wechsel des Betriebszustands der Kamera aufmerksam gemacht werden. Insbesondere können solche Anzeigesignale zusätzlich zu den akustisch und/oder haptisch wahrnehmbaren Kamerastatus-Rückmeldesignalen oder bei einem wahlweisen Unterdrücken der Kamerastatus-Rückmeldesignale vorgesehen sein. Beispielsweise kann dadurch ein Bediener der Fernsteuereinheit auch in Situationen, in welchen das Erzeugen eines akustisch wahrnehmbaren Kamerastatus-Rückmeldesignal Störungen des Aufnahmebetriebs zur Folge haben könnte, durch das optisch wahrnehmbare Signal auf einen Wechsel des Betriebszustands der Kamera aufmerksam gemacht werden.

Es kann vorgesehen sein, dass die Fernsteuereinheit ein Basisteil umfasst, welches insbesondere einen Handgriff zum Halten der Fernsteuereinheit aufweisen kann, wobei das Bedienelement relativ zu dem Basisteil beweglich ist, und wobei die Steuerbefehle einer jeweiligen Position oder Bewegung des Bedienelements relativ zu dem Basisteil entsprechen. Das bewegliche Bedienelement kann beispielsweise einen Taster, einen Schalter, einen Drehsteller (z.B. Stellrad) und/oder einen Linearsteller (z.B. Schieberegler) umfassen. Insbesondere kann ein solches bewegliches Bedienelement ein drehbares Stellrad umfassen, mittels dessen die Steuerbefehle bzw. jeweilige gewünschte Werte von an der Kamera zu verändernden Parameter eingestellt werden können.

Die Fernsteuereinheit kann eine Anzeigeeinrichtung zum Anzeigen wenigstens eines Symbols umfassen, wobei die Auswerte- und Steuereinrichtung dazu ausgebildet sein kann, die Position oder den Wert des Symbols in Abhängigkeit von dem eingestellten Steuerbefehl zu verändern. Eine solche Anzeigeeinrichtung kann es dem Bediener ermöglichen, die mittels des Bedienelements vorgenommene Einstellung zu überprüfen und den an die Kamera übermittelten Steuerbefehl gegebenenfalls anzupassen, falls der eingestellte Parameter nicht den vorgesehenen Wert aufweist. Insbesondere kann die Anzeigeeinrichtung dazu ausgebildet sein, den Wert eines eingestellten Parameters unmittelbar anzuzeigen, um eine einfache Möglichkeit zur Kontrolle zu bieten.

Bei einigen Ausführungsformen kann die Ausgabeeinrichtung zu einem drahtlosen Übermitteln des Stellmotor-Steuersignals an die zugeordnete Kamera ausgebildet sein und die Empfangseinrichtung kann zu einem drahtlosen Empfangen der Betriebszustandssignale von der zugeordneten Kamera ausgebildet sein. Die Ausgabeeinrichtung und die Empfangseinrichtung können somit als Funkmodule ausgebildet oder mit einem Funkmodul verbunden sein, um eine drahtlose Kommunikation zwischen der Fernsteuereinheit und der zugeordneten Kamera zu ermöglichen. Insbesondere kann dadurch erreicht werden, dass ein Bediener der Fernsteuereinheit sich lediglich in ausreichender Nähe zu der Kamera aufhalten muss, um einen Austausch von Funksignalen zwischen der Kamera und der Fernsteuereinheit zu ermöglichen.

Die Erfindung wird im Folgenden rein beispielhaft anhand möglicher Ausführungsformen unter Bezugnahme auf die Zeichnungen erläutert.

Es zeigen:
- Fig. 1: eine schematische Darstellung einer Bewegtbildkamera,
- Fig. 2: eine beispielhafte Ansicht einer Fernsteuereinheit für die Bewegtbildkamera, und
- Fig. 3 bis 6: jeweilige schematische Darstellungen möglicher Ausführungsformen der Fernsteuereinheit zur Veranschaulichung deren Funktionsweise.

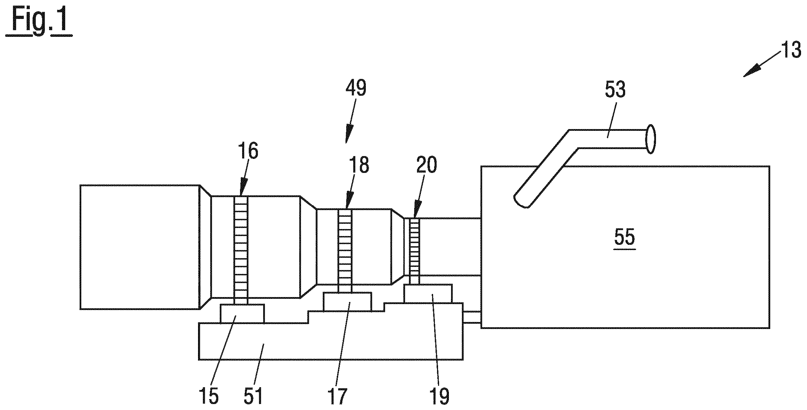

Fig. 1 zeigt eine Bewegtbildkamera 13 mit einem Kamerakörper 55, an welchem ein Wechselobjektiv 49 montiert ist. Dieses Wechselobjektiv 49 weist drei Objektivringe 16, 18 und 20 auf, die mittels jeweiliger externer Objektiv-Stellmotoren 15, 17 und 19 verstellt werden können. Beispielsweise kann dabei der erste Objektivring 16 dazu vorgesehen sein, die Fokusentfernung des Objektivs 49 einzustellen, während durch Drehen des zweiten Objektivrings 18 beispielsweise eine gewünschte Brennweiteneinstellung vorgenommen werden kann. Ferner kann der dritte Objektivring 20 insbesondere vorgesehen sein, um mittels des zugeordneten dritten Objektiv-Stellmotors 19 eine Irisblendenöffnung einstellen zu können. Die Stellmotoren 15, 17 und 19 sind dabei Teil einer Objektivring-Antriebseinheit 51, welche mit dem Kamerakörper 55 verbunden ist (z.B. über Haltestangen), aber eine von der Bewegtbildkamera 13 separate und unabhängige Einheit sein kann. Die Stellmotoren 15, 17, 19 und die Objektivring-Antriebseinheit 51 sind jedoch über das verwendete Wechselobjektiv 49 einer jeweiligen Bewegtbildkamera 13 zugeordnet. Die Objektivring-Antriebseinheit 51 kann eine Kommunikationsschnittstelle und/oder eine Steuerschaltung zum Empfangen von Stellmotor-Steuersignalen bzw. zum entsprechenden Ansteuern der Objektiv-Stellmotoren 15, 17, 19 umfassen. Ferner ist an dem Kamerakörper 55 ein Sucher 53 angeordnet, mittels dessen ein die Bewegtbildkamera 13 führender Kameramann einen aufzunehmenden Bildausschnitt anvisieren kann.

Indem die Bewegtbildkamera 13 mit einem Wechselobjektiv 49 ausgestattet ist, welches mit dem Kamerakörper 55 verbindbar ist, können grundsätzlich auch andersartig ausgebildete Objektive 49 mit dem Kamerakörper 55 verbunden werden, um flexibel eine Bewegtbildkamera 13 bereitstellen zu können, die für eine aufzunehmende Szene optimale Einstellungen ermöglicht. Beispielsweise können auch Objektive 49 mit fester Brennweite vorgesehen sein, die lediglich zwei Objektivringe 16 und 20 zum Verstellen der Fokuslage sowie der Irisblendenöffnung mittels zugeordneter Stellmotoren 17 und 19 aufweisen.

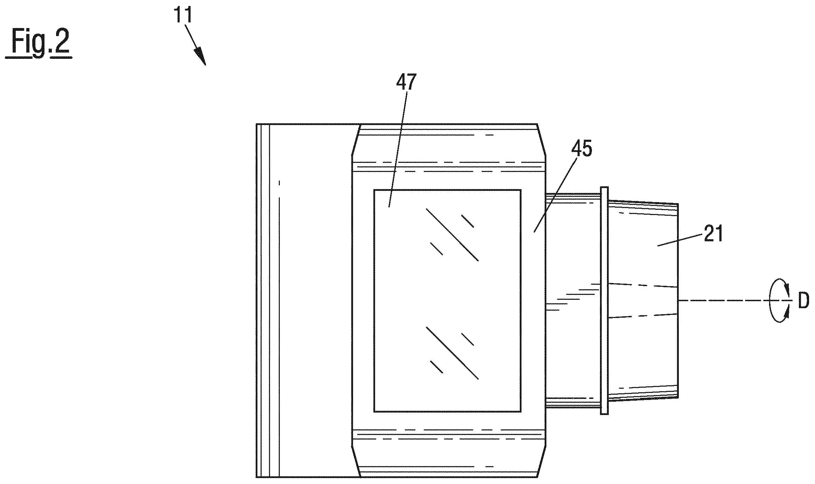

Während einer Aufnahme einer Szene ist es in der Regel vorgesehen, dass die Kamera 13 bzw. deren Objektiv 49 von einem Kameramann bewegt wird, um einen jeweiligen aufzunehmenden Bildausschnitt anzuvisieren. Entsprechende Anpassungen der Aufnahmeparameter, die bei einer solchen Änderung des Bildausschnitts möglicherweise vorzunehmen sind, beispielsweise der Fokusentfernung, werden hingegen meist von einem Kameraassistenten oder Schärfezieher mittels einer Fernsteuereinheit 11 vorgenommen, deren mögliche Ausbildung in Fig. 2 veranschaulicht ist.

Dabei dient die hier dargestellte Bewegtbildkamera 13 mit dem Objektiv 49 lediglich der Veranschaulichung. Grundsätzlich kann die Fernsteuereinheit 11 auch dazu ausgebildet sein, andersartige Bewegtbildkameras 13 bzw. andersartige Objektive 49 ferngesteuert einzustellen, welche anstelle der von außen drehbaren Objektivringe 16, 18, 20 für die externen Stellmotoren 15, 17, 19 beispielsweise integrierte Objektiv-Stellmotoren aufweisen können.

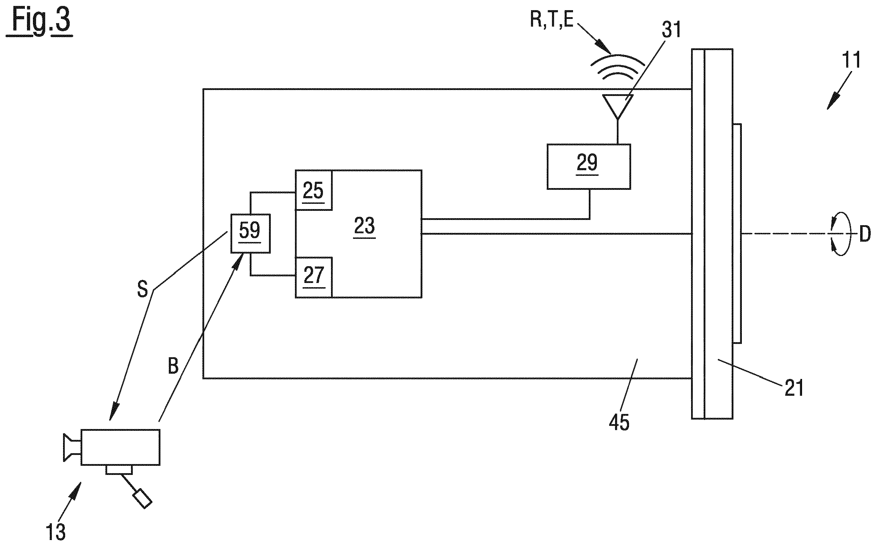

Die in Fig. 2 gezeigte Fernsteuereinheit 11 weist ein Bedienelement 21 auf, welches als Stellrad ausgebildet und relativ zu einem Basisteil 45 um eine Drehachse D drehbar ist. Durch Drehen des Bedienelements 21 bzw. Verändern dessen Drehstellung relativ zu dem Basisteil 45 können dabei Steuerbefehle für die Kamera 13 eingestellt werden, die als Stellmotor-Steuersignale S an die Bewegtbildkamera 13 bzw. an die zugeordnete Objektivring-Antriebseinheit 51 mit den Objektiv-Stellmotoren 15, 17 und 19 übermittelt werden (vgl. auch Fig. 3 bis 6).

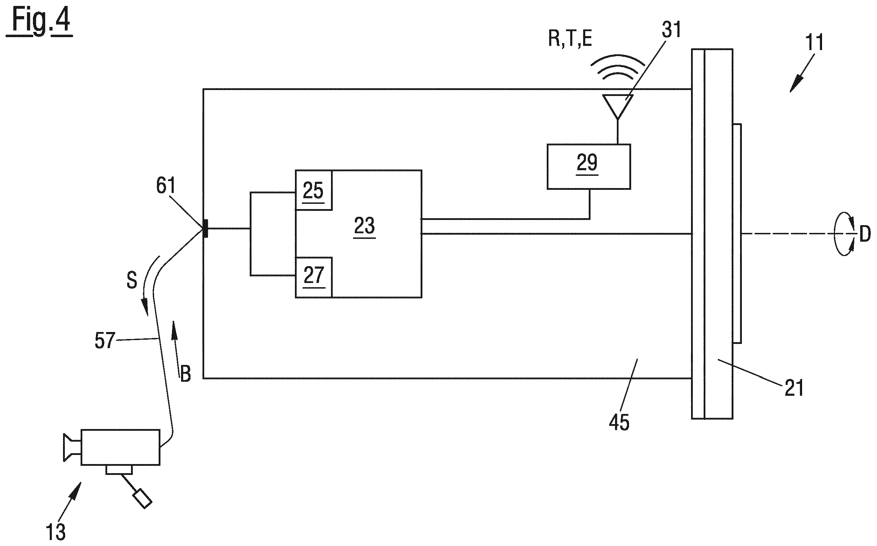

Wie die Fig. 3 bis 6 zeigen, weist die Fernsteuereinheit 11 dazu eine mit dem Bedienelement 21 bzw. dem Basisteil 45 verbundene Auswerte- und Steuereinrichtung 23 auf, die dazu ausgebildet ist, den eingestellten Steuerbefehl für die Kamera 13 zu erfassen und ein korrespondierendes Stellmotor-Steuersignal S zu erzeugen. Um das erzeugte Stellmotor-Steuersignal S an die Kamera 13 zu übermitteln, umfasst die Auswerte- und Steuereinrichtung 23 eine Ausgabeeinrichtung 25. Dabei kann die Ausgabeeinrichtung 25 mit einem Funkmodul 59 verbunden sein, um das Stellmotor-Steuersignal S drahtlos, insbesondere über eine Funkverbindung, an die Kamera 13 übermitteln zu können (vgl. Fig. 3, 5 und 6). Dies kann es dem Bediener der Fernsteuereinheit 11 insbesondere ermöglichen, sich während eines Drehs an einem Ort zu positionieren, der ein optimales Überblicken des Aufnahmebetriebs ermöglicht, ohne dass der Bediener etwaigen Bewegungen des Kameramanns folgen muss. Alternativ dazu kann es jedoch auch vorgesehen sein, dass die Ausgabeeinrichtung 25 mit einem drahtgebundenen Kameraanschluss 61 verbunden ist, über welchen die Kamera 13 bzw. eine zugeordnete externe Objektivring-Antriebseinheit 51 über ein Kabel 57 mit der Fernsteuereinheit 11 verbindbar ist (vgl. Fig. 4).

Um die Überprüfung einer korrekten Einstellung der ferngesteuerten Bewegtbildkamera 13 zu erleichtern, weist die Fernsteuereinheit 11 ferner eine Anzeigeeinrichtung 47 auf, welche dazu ausgebildet ist, ein Symbol anzuzeigen und das Symbol und/oder dessen Position in Abhängigkeit von dem eingestellten Steuerbefehl zu verändern (vgl. Fig. 2). Insbesondere kann dabei auf der Anzeigeeinrichtung 47 der jeweilige momentan eingestellte Wert eines eingestellten Aufnahmeparameters, beispielsweise eine Brennweite, angezeigt werden, so dass ein Bediener der Fernsteuereinheit 11 die vorgenommene Einstellung unmittelbar überprüfen kann.

Für einen die Fernsteuereinheit 11 bedienenden Kameraassistenten oder Schärfezieher ist es wichtig, den Beginn einer Bewegtbildaufnahme zuverlässig wahrzunehmen, damit er sodann eine geplante oder einstudierte Abfolge von Steuerungsbefehlen an der Fernsteuereinheit 11 einstellen kann. Um dem Bediener der Fernsteuereinheit 11 einen solchen Wechsel des Betriebszustands der Kamera 13 zuverlässig wahrnehmbar anzuzeigen, ist eine akustische und/oder haptisch wahrnehmbare Signalisierung vorgesehen.

Hierfür weist die Fernsteuereinheit 11 eine Empfangseinrichtung 27 zum Empfangen von Betriebszustandssignalen B von der Kamera 13 auf. Dieses Empfangen der Betriebszustandssignale B kann, wie die Übermittlung des Stellmotor-Steuersignals S mittels der Ausgabeeinrichtung 25, drahtlos über das Funkmodul 59 (vgl. Fig. 3, 5 und 6) und/oder drahtgebunden über einen Kameraanschluss 61 (vgl. Fig. 4) erfolgen. Ferner umfasst die Fernsteuereinheit 11 eine Rückmeldeeinrichtung 29, wobei die Auswerte- und Steuereinrichtung 23 dazu ausgebildet ist, in Ansprechen auf einen Empfang des Betriebszustandssignals B, das einen Wechsel der zugeordneten Kamera 13 in den Aufnahmezustand repräsentiert, die Rückmeldeeinrichtung 29 zum Erzeugen eines unmittelbar oder indirekt akustisch und/oder haptisch wahrnehmbaren Kamerastatus-Rückmeldesignals R anzusteuern. Indem dieses Rückmeldesignal R akustisch und/oder haptisch wahrnehmbar ist, kann erreicht werden, dass der Bediener der Fernsteuereinheit 11 zuverlässig auf einen Wechsel der Kamera 13 in den Aufnahmezustand aufmerksam wird, auch wenn der Bediener die Bewegtbildkamera oder die Fernsteuereinheit nicht ständig im Blick behält.

In dem in Fig. 3 gezeigten Ausführungsbeispiel ist die Rückmeldeeinrichtung 29 zum Erzeugen eines unmittelbar akustisch wahrnehmbaren Rückmeldesignals R mit einem Lautsprecher 31 verbunden. In Ansprechen auf ein drahtlos mittels des Funkmoduls 59 über die Empfangseinrichtung 27 von der Kamera 13 empfangenes Betriebszustandssignal B kann die Rückmeldeeinrichtung 29 durch die Auswerte- und Steuereinrichtung 23 dazu veranlasst werden, ein Tonsignal T über den Lautsprecher 31 zu erzeugen, welches hier das Kamerastatus-Rückmeldesignal R bildet. Durch ein solches, unmittelbar akustisch wahrnehmbares Kamerastatus-Rückmeldesignal R kann der Bediener der Fernsteuereinheit 11 auf einen erfolgten Wechsel der Kamera 13 in den Aufnahmezustand aufmerksam gemacht werden.

Gleichermaßen kann gemäß dem Ausführungsbeispiel der Fig. 4 in Ansprechen auf ein über ein Kabel 57 übermitteltes und an einem Kameraanschluss 61 empfangenes Betriebszustandssignal B ein solches Tonsignal T bzw. ein unmittelbar akustisch wahrnehmbares Kamerastatus-Rückmeldesignal R mittels des Lautsprechers 31 erzeugt werden.

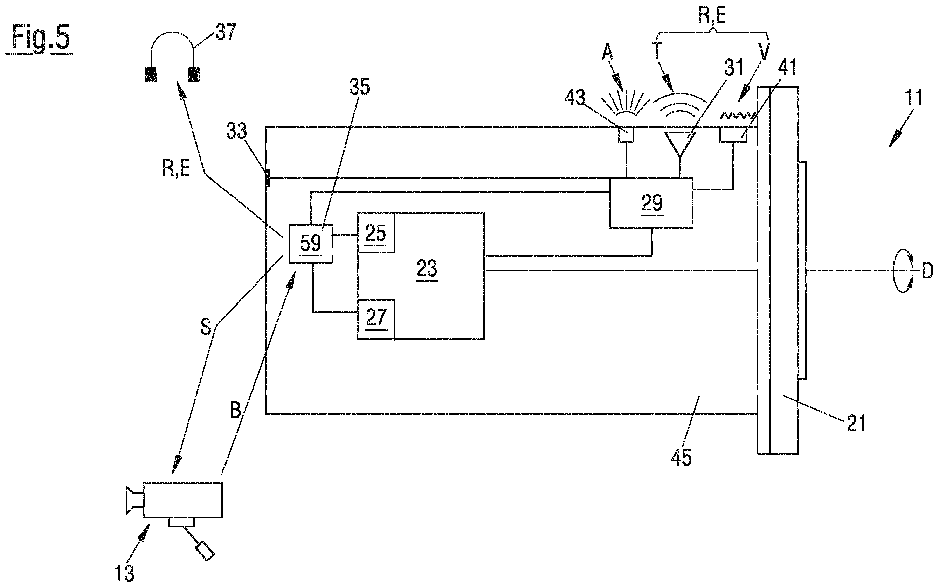

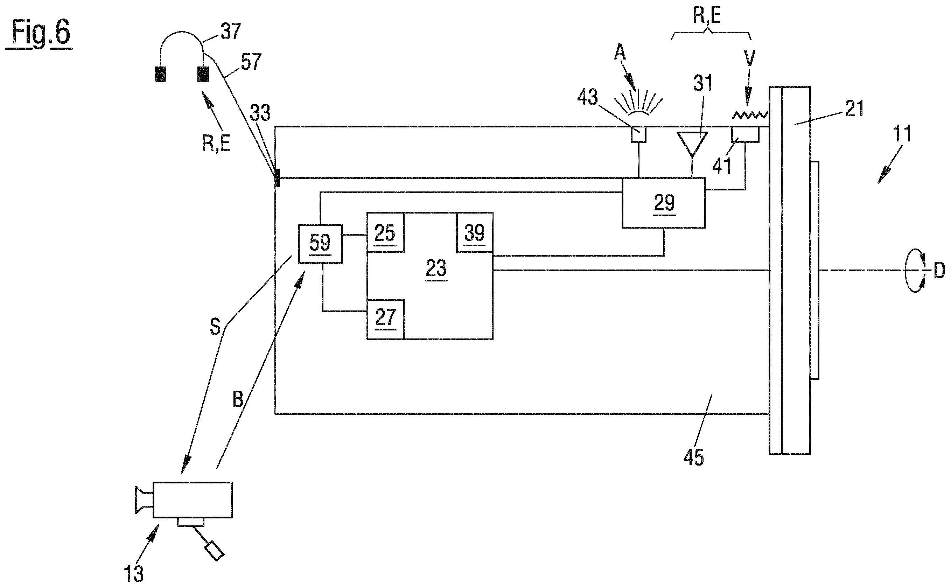

Wie Fig. 5 verdeutlicht, kann auch die Rückmeldeeinrichtung 29 mit einem Funkmodul 59 verbunden sein (insbesondere mit dem bereits genannten Funkmodul 59 oder einem anderen Funkmodul). Dies kann es ermöglichen, ein erzeugtes Kamerastatus-Rückmeldesignal R drahtlos an ein externes Tonausgabegerät 37, welches hier als Kopfhörer ausgebildet ist, zu übertragen. Beispielsweise kann dabei eine Übertragung über eine Bluetooth-Verbindung nach einem gängigen Übertragungsprotokoll vorgesehen sein. Ferner kann die Rückmeldeeinrichtung 29, zusätzlich zu diesem als drahtloser Audiosignalausgang 35 fungierenden Funkmodul 59, mit einem drahtgebundenen Audiosignalausgang 33 (z.B. Kopfhöhrerbuchse) verbunden sein, durch welchen das externe Tonausgabegerät 37 mit der Fernsteuereinheit 11 über ein Kabel 57 verbindbar ist (vgl. auch Fig. 6).

Indem das Kamerastatus-Rückmeldesignal R an ein externes Tonausgabegerät 37 und insbesondere einen Kopfhörer übermittelt wird, kann ein indirekt akustisch wahrnehmbares, nämlich an dem angeschlossenen Tonausgabegerät 37 akustisch wahrnehmbares Kamerastatus-Rückmeldesignal R erzeugt werden. Durch eine solche Übermittlung an einen Kopfhörer 37 kann insbesondere erreicht werden, dass der Bediener der Fernsteuereinheit 11 zuverlässig auf einen Wechsel des Betriebszustands der Kamera 13 aufmerksam wird, ohne dass beispielsweise sich in der Nähe der Fernsteuereinheit 11 befindende weitere Personen durch ein unmittelbar akustisch wahrnehmbares Kamerastatus-Rückmeldesignal R gestört werden. Dazu kann, wie Fig. 6 veranschaulicht, die Auswerte- und Steuereinrichtung 23 dazu ausgebildet sein, das Erzeugen eines Tonsignals T mittels des Lautsprechers 31 automatisch zu unterdrücken, wenn das externe Tonausgabegerät 37 mit der Fernsteuereinheit 11 verbunden ist. Gleichermaßen kann ein solches Unterdrücken des Tonsignals T auch vorgesehen sein, wenn eine drahtlose Verbindung zwischen dem Funkmodul 59 und einem externen Tonausgabegerät 37 erfasst wird. Grundsätzlich kann es auch vorgesehen sein, die Fernsteuereinheit 11 ohne Lautsprecher 31 und ausschließlich zu einem Erzeugen indirekt akustisch wahrnehmbarer Kamerastatus-Rückmeldesignale R mittels eines externen Tonausgabegeräts 37 und insbesondere an einem Kopfhörer auszubilden.

Wie die Fig. 5 und 6 ferner zeigen, kann die Rückmeldeeinrichtung 29 zusätzlich, jedoch grundsätzlich auch alternativ, zu dem Lautsprecher 31 eine Vibrationseinrichtung 41 (Vibrationsgenerator) aufweisen, so dass das Kamerastatus-Rückmeldesignal R ein unmittelbar haptisch wahrnehmbares Vibrationssignal V umfassen kann. Auch mittels eines solchen haptisch wahrnehmbaren Vibrationssignals V kann ein Bediener der Fernsteuereinheit 11, welcher die Fernsteuereinheit 11 während einer Unterbrechung des Aufnahmebetriebs in der Hand behält, unmittelbar und zuverlässig auf einen Wechsel der Kamera 13 in den Aufnahmezustand aufmerksam gemacht werden. Darüber hinaus kann die Rückmeldeeinrichtung 29 mit einem optischen Signalgeber 43 verbunden sein, um dem Bediener der Fernsteuereinheit 11 den Wechsel der Kamera 13 in den Aufnahmezustand zusätzlich mittels eines optisch wahrnehmbaren Anzeigesignals A anzeigen zu können.

Ferner kann es vorgesehen sein, dass die Auswerte- und Steuereinrichtung 23 dazu ausgebildet ist, die Rückmeldeeinrichtung 29 auch bei einem Wechsel der Kamera 13 von dem Aufnahmezustand in den Bereitschaftszustand zu einem Erzeugen eines akustisch und/oder haptisch wahrnehmbaren Kamerastatus-Rückmeldesignals R anzusteuern. Insbesondere können sich die Kamerastatus-Rückmeldesignale R dabei in Abhängigkeit von dem erfolgten Wechsel voneinander unterscheiden. Ferner kann die Fernsteuereinheit 11 eine Auswahleinrichtung 39 umfassen (z.B. mechanischer oder virtueller Schalter), mittels derer das Erzeugen eines Kamerastatus-Rückmeldesignals R für ein jeweiliges Betriebszustandssignal B wahlweise unterdrückt werden kann (vgl. Fig. 6). Alternativ oder zusätzlich kann die Fernsteuereinheit 11 einen Schalter 39 aufweisen, mittels dessen die Tonsignalausgabe an dem Lautsprecher 31 wahlweise abschaltbar ist.

Ebenfalls kann es vorgesehen sein, dass die Auswerte- und Steuereinrichtung 23 zu einem Erzeugen akustisch und/oder haptisch wahrnehmbarer Einstellwert-Rückmeldesignale E mittels der Rückmeldeeinrichtung 29 in Abhängigkeit von dem eingestellten Steuerbefehl ausgebildet ist. Beispielsweise kann es vorgesehen sein, mittels des Lautsprechers 31 oder eines externen Tonausgabegeräts 37 ein akustisch wahrnehmbares Tonsignal T zu erzeugen, wenn ein Parameter der Kamera 13 einen vorbestimmten Wert erreicht. Der Bediener der Fernsteuereinheit 11 kann so während des Einstellens der Kamera 13 bzw. des Objektivs 49 den Aufnahmebetrieb dauerhaft beobachten, ohne zur Überprüfung der Einstellung auf die Fernsteuereinheit 11 blicken zu müssen. Dabei kann das Einstellwert-Rückmeldesignal E in gleicher Weise wie ein Kamerastatus-Rückmeldesignal R gehandhabt und beispielsweise auch an ein gekoppeltes externes Tonausgabegerät 37 übertragen werden.

Während die Ausgabeeinrichtung 25 und die Empfangseinrichtung 27 in den Fig. 3 bis 6 als von der Auswerte- und Steuereinrichtung 23 umfasst dargestellt sind, können die Ausgabeeinrichtung 25 und die Empfangseinrichtung 27 gleichermaßen als gesonderte Module vorgesehen und mit der Auswerte-und Steuereinrichtung 23 lediglich verbunden sein. Ferner können die Ausgabeeinrichtung 25 und die Empfangseinrichtung 27 beispielsweise als gemeinsames Modul in Form eines Transceivers ausgebildet sein. Alternativ zu einem gesondert vorgesehenen Funkmodul 59 können darüber hinaus auch die Ausgabeeinrichtung 25, die Empfangseinrichtung 27 und die Rückmeldeeinrichtung 29 selbst jeweilige Funkmodule umfassen oder als solche ausgebildet sein.

Die Fernsteuereinheit 11 bietet folglich eine einfache Möglichkeit, deren Bediener über einen Wechsel der zugeordneten Bewegtbildkamera 13 von dem Bereitschaftszustand in den Aufnahmezustand zu informieren und ein Wahrnehmen dieses Betriebszustandswechsels sicherzustellen. Etwaige Störungen des Aufnahmebetriebs aufgrund eines Verpassens des Beginns einer Aufnahme und dadurch bedingte ausbleibende oder verspätete Einstellungen der Parameter der Kamera 13 können somit zuverlässig verhindert werden.

### Bezugszeichenliste

- 11: Fernsteuereinheit
- 13: Bewegtbildkamera
- 15: erster Objektiv-Stellmotor
- 16: erster Objektivring
- 17: zweiter Objektiv-Stellmotor
- 18: zweiter Objektivring
- 19: dritter Objektiv-Stellmotor
- 20: dritter Objektivring
- 21: Bedienelement
- 23: Auswerte- und Steuereinrichtung
- 25: Ausgabeeinrichtung
- 27: Empfangseinrichtung
- 29: Rückmeldeeinrichtung
- 31: Lautsprecher
- 33: drahtgebundener Audiosignalausgang
- 35: drahtloser Audiosignalausgang
- 37: externes Tonausgabegerät
- 39: Auswahleinrichtung, Schalter
- 41: Vibrationseinrichtung
- 43: optischer Signalgeber
- 45: Basisteil
- 47: Anzeigeeinrichtung
- 49: Wechselobjektiv
- 51: Objektivring-Antriebseinheit
- 53: Sucher
- 55: Kamerakörper
- 57: Kabel
- 59: Funkmodul
- 61: Kameraanschluss

- A: Anzeigesignal
- B: Betriebszustandssignal
- D: Drehachse
- E: Einstellwert-Rückmeldesignal
- R: Kamerastatus-Rückmeldesignal
- S: Stellmotor-Steuersignal
- T: Tonsignal
- V: Vibrationssignal

## Patentansprüche

1. Fernsteuereinheit (11) für eine Bewegtbildkamera (13) mit Objektiv-Stellmotor (15, 17, 19), umfassend
ein bewegliches Bedienelement (21) zum Einstellen von Steuerbefehlen für eine zugeordnete Kamera (13),
eine Auswerte- und Steuereinrichtung (23) zum Erzeugen eines Stellmotor-Steuersignals (S) für die Kamera (13) in Abhängigkeit von dem eingestellten Steuerbefehl, und
eine Ausgabeeinrichtung (25) zum Übermitteln des Stellmotor-Steuersignals (S) an die zugeordnete Kamera (13),
wobei
die Fernsteuereinheit (11) eine Empfangseinrichtung (27) zum Empfangen von Betriebszustandssignalen (B) von der zugeordneten Kamera (13), und eine Rückmeldeeinrichtung (29) umfasst,
**dadurch gekennzeichnet dass**
die Auswerte- und Steuereinrichtung (23) dazu ausgebildet ist, in Ansprechen auf ein empfangenes Betriebszustandssignal (B), welches einen nicht an der Fernsteuereinheit ausgelösten Wechsel der zugeordneten Kamera (13) von einem Bereitschaftszustand in einen Aufnahmezustand repräsentiert, die Rückmeldeeinrichtung (29) zum Erzeugen eines Kamerastatus-Rückmeldesignals (R) anzusteuern, das unmittelbar oder indirekt akustisch und/oder haptisch wahrnehmbar ist.

2. Fernsteuereinheit (11) nach Anspruch 1,
wobei die Rückmeldeeinrichtung (29) einen Lautsprecher (31) aufweist, und wobei das Kamerastatus-Rückmeldesignal (R) ein von dem Lautsprecher (31) erzeugtes akustisch wahrnehmbares Tonsignal (T) umfasst.

3. Fernsteuereinheit (11) nach Anspruch 2,
wobei die Lautstärke des erzeugten Tonsignals (T) einstellbar ist.

4. Fernsteuereinheit (11) nach Anspruch 2 oder 3,
wobei die Fernsteuereinheit (11) einen Schalter (39) aufweist, mittels dessen die Erzeugung des Tonsignals (T) wahlweise abschaltbar ist.

5. Fernsteuereinheit (11) nach einem der vorhergehenden Ansprüche,
wobei die Rückmeldeeinrichtung (29) einen drahtgebundenen Audiosignalausgang (33) und/oder drahtlosen Audiosignalausgang (35) aufweist, über welchen das Kamerastatus-Rückmeldesignal (R) an ein gekoppeltes externes Tonausgabegerät (37) übermittelbar ist.

6. Fernsteuereinheit (11) nach einem der vorhergehenden Ansprüche,
wobei die Fernsteuereinheit (11) eine Auswahleinrichtung (39) umfasst, mittels derer das Erzeugen des Kamerastatus-Rückmeldesignals (R) wahlweise unterdrückbar ist.

7. Fernsteuereinheit (11) nach Anspruch 2 und Anspruch 5,
wobei die Auswerte- und Steuereinrichtung (23) dazu ausgebildet ist, in Ansprechen auf das empfangene Betriebszustandssignal (B) die Rückmeldeeinrichtung (29) zum Ausgeben des Kamerastatus-Rückmeldesignals (R) über den Audiosignalausgang anzusteuern und jedoch ein Ausgeben des von dem Lautsprecher (31) erzeugten Tonsignals (T) zu unterdrücken, wenn ein externes Tonausgabegerät (37) mit dem Audiosignalausgang (33, 35) gekoppelt ist.

8. Fernsteuereinheit (11) nach einem der vorhergehenden Ansprüche,
wobei die Rückmeldeeinrichtung (29) eine Vibrationseinrichtung (41) aufweist, und wobei das Kamerastatus-Rückmeldesignal (R) ein von der Vibrationseinrichtung (41) erzeugtes und von einem Bediener der Fernsteuereinheit (11) fühlbares Vibrationssignal (V) umfasst.

9. Fernsteuereinheit (11) nach einem der vorhergehenden Ansprüche,
wobei die Auswerte- und Steuereinrichtung (23) dazu ausgebildet ist, in Ansprechen auf ein empfangenes Betriebszustandssignal (B), welches einen Wechsel der zugeordneten Kamera (13) von dem Aufnahmezustand in den Bereitschaftszustand repräsentiert, die Rückmeldeeinrichtung (29) zum Erzeugen eines weiteren Kamerastatus-Rückmeldesignals (R) anzusteuern, das unmittelbar oder indirekt akustisch und/oder haptisch wahrnehmbar ist.

10. Fernsteuereinheit (11) nach Anspruch 9,
wobei das Kamerastatus-Rückmeldesignal (R) und das weitere Kamerastatus-Rückmeldesignal (R) sich voneinander unterscheiden.

11. Fernsteuereinheit (11) nach einem der vorhergehenden Ansprüche,
wobei die Auswerte- und Steuereinrichtung (23) dazu ausgebildet ist, in Abhängigkeit von dem mittels des Bedienelements (21) eingestellten Steuerbefehl die Rückmeldeeinrichtung (29) zum Erzeugen eines Einstellwert-Rückmeldesignals (E) anzusteuern, das unmittelbar oder indirekt akustisch und/oder haptisch wahrnehmbar ist.

12. Fernsteuereinheit (11) nach einem der vorhergehenden Ansprüche,
wobei die Fernsteuereinheit (11) ein Basisteil (45) umfasst, wobei das Bedienelement (21) relativ zu dem Basisteil (45) beweglich ist, und wobei die Steuerbefehle einer jeweiligen Position oder Bewegung des Bedienelementes (21) relativ zu dem Basisteil (45) entsprechen.

13. Fernsteuereinheit (11) nach einem der vorhergehenden Ansprüche,
wobei die Ausgabeeinrichtung (25) zu einem drahtlosen Übermitteln des Stellmotor-Steuersignals (S) an die zugeordnete Kamera (13) ausgebildet ist, und wobei die Empfangseinrichtung (27) zu einem drahtlosen Empfangen der Betriebszustandssignale (B) von der zugeordneten Kamera (13) ausgebildet ist.

## Claims

1. A remote control unit (11) for a motion picture camera (13) having a lens actuating motor (15, 17, 19), comprising
a movable operating element (21) for setting control commands for an associated camera (13);
an evaluation and control device (23) for generating an actuating motor control signal (S) for the camera (13) in dependence on the set control command; and
an output device (25) for transmitting the actuating motor control signal (S) to the associated camera (13),
wherein the remote control unit (11) comprises a reception device (27) for receiving operating state signals (B) from the associated camera (13); and a feedback device (29),
**characterized in that**
the evaluation and control device (23) is configured, in response to a received operating state signal (B) which represents a change, not triggered at the remote control unit, of the associated camera (13) from a standby state to a recording state, to control the feedback device (29) to generate a camera status feedback signal (R) which is directly or indirectly acoustically and/or haptically perceivable.

2. A remote control unit (11) according to claim 1,
wherein the feedback device (29) has a loudspeaker (31), and wherein the camera status feedback signal (R) comprises an acoustically perceivable sound signal (T) generated by the loudspeaker (31).

3. A remote control unit (11) according to claim 2,
wherein the volume of the generated sound signal (T) is adjustable.

4. A remote control unit (11) according to claim 2 or 3,
wherein the remote control unit (11) has a switch (39) by means of which the generation of the sound signal (T) can be selectively switched off.

5. A remote control unit (11) according to any one of the preceding claims,
wherein the feedback device (29) has a wired audio signal output (33) and/or a wireless audio signal output (35) via which the camera status feedback signal (R) can be transmitted to a coupled external sound output device (37).

6. A remote control unit (11) according to any one of the preceding claims,
wherein the remote control unit (11) comprises a selection device (39) by means of which the generation of the camera status feedback signal (R) can be selectively suppressed.

7. A remote control unit (11) according to claim 2 and claim 5,
wherein the evaluation and control device (23) is configured, in response to the received operating state signal (B), to control the feedback device (29) to output the camera status feedback signal (R) via the audio signal output and said evaluation and control device (23) is, however, configured to suppress an output of the sound signal (T) generated by the loudspeaker (31) when an external sound output device (37) is coupled to the audio signal output (33, 35).

8. A remote control unit (11) according to any one of the preceding claims,
wherein the feedback device (29) has a vibration device (41), and wherein the camera status feedback signal (R) comprises a vibration signal (V) which is generated by the vibration device (41) and which can be sensed by an operator of the remote control unit (11).

9. A remote control unit (11) according to any one of the preceding claims,
wherein the evaluation and control device (23) is configured, in response to a received operating state signal (B) which represents a change of the associated camera (13) from the recording state to the standby state, to control the feedback device (29) to generate a further camera status feedback signal (E) which is directly or indirectly acoustically and/or haptically perceivable.

10. A remote control unit (11) according to claim 9,
wherein the camera status feedback signal (R) and the further camera status feedback signal (R) differ from one another.

11. A remote control unit (11) according to any one of the preceding claims,
wherein the evaluation and control device (23) is configured to control the feedback device (29), in dependence on the control command set by means of the operating element (21), to generate a setting value feedback signal (E) which is directly or indirectly acoustically and/or haptically perceivable.

12. A remote control unit (11) according to any one of the preceding claims,
wherein the remote control unit (11) comprises a base part (45), wherein the operating element (21) is movable relative to the base part (45), and wherein the control commands correspond to a respective position or movement of the operating element (21) relative to the base part (45).

13. A remote control unit (11) according to any one of the preceding claims,
wherein the output device (25) is configured for a wireless transmission of the actuating motor control signal (S) to the associated camera (13), and wherein the reception device (27) is configured for a wireless reception of the operating state signals (B) from the associated camera (13).

## Revendications

1. Unité de télécommande (11) pour une caméra à images animées (13) pourvue d'un servomoteur d'objectif (15, 17, 19), comprenant
un élément de manipulation mobile (21) pour régler des instructions de commande pour une caméra associée (13),
un dispositif d'évaluation et de commande (23) pour générer un signal de commande de servomoteur (S) pour la caméra (13) en fonction de l'instruction de commande réglée,
un dispositif de sortie (25) pour transmettre le signal de commande de servomoteur (S) à la caméra associée (13),
l'unité de télécommande (11) comprenant un dispositif de réception (27) pour recevoir des signaux d'état de fonctionnement (B) de la caméra associée (13), et un dispositif de retour d'information (29),
**caractérisée en ce que**
en réponse à un signal d'état de fonctionnement (B) reçu qui représente un passage de la caméra associée (13) d'un état d'attente à un état de prise de vue, ledit passant n'étant pas déclenché par l'unité de télécommande, le dispositif d'évaluation et de commande (23) est conçu pour commander le dispositif de retour d'information (29) pour générer un signal de retour d'état de caméra (R) qui est perceptible directement ou indirectement par voie acoustique et/ou haptique.

2. Unité de télécommande (11) selon la revendication 1,
dans laquelle le dispositif de retour d'information (29) comprend un haut-parleur (31), et le signal de retour d'état de caméra (R) inclut un signal sonore (T) généré par le haut-parleur (31) et perceptible acoustiquement.

3. Unité de télécommande (11) selon la revendication 2,
dans laquelle le volume du signal sonore (T) généré est réglable.

4. Unité de télécommande (11) selon la revendication 2 ou 3,
dans laquelle l'unité de télécommande (11) comporte un interrupteur (39) permettant de désactiver sélectivement la génération du signal sonore (T).

5. Unité de télécommande (11) selon l'une des revendications précédentes,
dans laquelle le dispositif de retour d'information (29) présente une sortie de signal audio filaire (33) et/ou une sortie de signal audio sans fil (35) permettant de transmettre le signal de retour d'état de caméra (R) à un appareil de sortie sonore externe couplé (37).

6. Unité de télécommande (11) selon l'une des revendications précédentes,
dans laquelle l'unité de télécommande (11) comprend un dispositif de sélection (39) permettant de supprimer sélectivement la génération du signal de retour d'état de caméra (R).

7. Unité de télécommande (11) selon la revendication 2 et la revendication 5,
dans laquelle le dispositif d'évaluation et de commande (23) est conçu pour, en réponse au signal d'état de fonctionnement (B) reçu, commander le dispositif de retour d'information (29) pour émettre le signal de retour d'état de caméra (R) par l'intermédiaire de la sortie de signal audio, mais pour supprimer l'émission d'un signal sonore (T) généré par le haut-parleur (31) lorsqu'un dispositif de sortie sonore externe (37) est couplé à la sortie de signal audio (33, 35).

8. Unité de télécommande (11) selon l'une des revendications précédentes,
dans laquelle le dispositif de retour d'information (29) comprend un dispositif vibrant (41), et le signal de retour d'état de caméra (R) inclut un signal de vibration (V) généré par le dispositif vibrant (41) et pouvant être ressenti par un opérateur de l'unité de télécommande (11).

9. Unité de télécommande (11) selon l'une des revendications précédentes,
dans laquelle le dispositif d'évaluation et de commande (23) est conçu pour, en réponse à un signal d'état de fonctionnement (B) reçu qui représente un passage de la caméra associée (13) de l'état de prise de vue à l'état d'attente, commander le dispositif de retour d'information (29) pour générer un autre signal de retour d'état de caméra (R) qui est perceptible directement ou indirectement par voie acoustique et/ou haptique.

10. Unité de télécommande (11) selon la revendication 9,
dans laquelle le signal de retour d'état de caméra (R) et l'autre signal de retour d'état de caméra (R) sont différents l'un de l'autre.

11. Unité de télécommande (11) selon l'une des revendications précédentes,
dans laquelle le dispositif d'évaluation et de commande (23) est conçu pour, en fonction de l'instruction de commande réglée au moyen de l'élément de manipulation (21), commander le dispositif de retour d'information (29) pour générer un signal de retour de valeur de réglage (E) qui est perceptible directement ou indirectement par voie acoustique et/ou haptique.

12. Unité de télécommande (11) selon l'une des revendications précédentes,
dans laquelle l'unité de télécommande (11) comprend une partie de base (45), l'élément de manipulation (21) est mobile par rapport à la partie de base (45), et les instructions de commande correspondent à une position ou un mouvement respectif de l'élément de manipulation (21) par rapport à la partie de base (45).

13. Unité de télécommande (11) selon l'une des revendications précédentes,
dans laquelle le dispositif de sortie (25) est conçu pour une transmission sans fil du signal de commande de servomoteur (S) à la caméra associée (13), et le dispositif de réception (27) est conçu pour une réception sans fil des signaux d'état de fonctionnement (B) de la caméra associée (13).
